# EUROPEAN PATENT APPLICATION

(11) **EP 4 647 558 A2**
(43) Date of publication of application: **12.11.2025**
(21) Application number: 25184333.0
(22) Date of filing: 29.07.2022
(51) Int. Cl.: E02F 9/28

(54) **WEAR ELEMENT ASSEMBLIES FOR EARTH MOVING MACHINES WITH WIRED CONNECTION AND PROTECTIVE DEVICE THEREFOR**

(30) Priority: 30.07.2021 EP 21382720
(62) Divisional of application: 22754888.0
(71) Applicant: Metalogenia Research & Technologies S.L., 08005 Barcelona (ES)
(72) Inventor: GIMENO TORDERA, Albert, 08027 Barcelona (ES); VALLVÉ BERTRAN, Nil, 08349 Cabrera de Mar (ES); FERRÁNDIZ BORRAS, Vicent, 08174 Sant Cugat del Vallès (ES)
(74) Representative: Elion IP, S.L.

(57) **Abstract**

An assembly for an earth moving machine, comprising: a first member and a second member coupled with the first member, the first member being a wear element for digging implements, the second member being digging implements or a second wear element for digging implements, the first member comprising: a first cavity adapted to receive at least one sensor, and a channel adapted to receive at least one electric wire; and at least one electric wire, one or more electric wires thereof being introduced in both the channel and the first cavity, and being attached to the second member. Also, an earth moving machine comprising the assembly, and a method for wiring.

## Description

### TECHNICAL FIELD

The present invention relates to the field of earth moving machines. More particularly, the present invention relates to assemblies with wear elements and earth moving machines having electronics that include wired connections for communications and/or energization thereof.

### BACKGROUND

Earth moving machines such as, for example, excavators, loaders, shovels, etc., comprise digging implements, e.g. bucket, shovel, dredgehead, etc., whereby material is pushed, penetrated, excavated, scratched, pulled, loaded and/or collected. The machine, the digging implements and all the components that are involved in the movement and rotation of the digging implements during engagement of the material (e.g. boom, stick, etc.) need to be operated both carefully and taking into account the characteristics of the components of the machine and also the characteristics of the material or terrain to be engaged, including but not limited to the hardness thereof, geometry thereof, weight thereof, etc. Such operation is important not only for an adequate movement of the machine on the terrain (i.e. the movement as commanded to the machine) and both loading and unloading of material, but also for both the health and safety of both the machine and the operator (if any).

The engagement of material pays a toll on the digging implements, which are subject to loads, impacts and stresses of high intensity that progressively wear off, deform and might break said implements. Hence, a plurality of wear elements is to be installed on the digging implements in order to protect different parts thereof from these adverse phenomena. The wear elements suffer the wearing and deformation resulting from the ground engaging that the digging implements suffer when those wear elements are lost or damaged. Wear elements, which are also named ground engaging tools in the field of earth moving machines, have become an essential element for earth moving machines over the years.

As the wear elements have now become the surface on the earth moving machine that contacts the material of the quarry or mine, the wear elements have not only been designed to resist the wearing and deformation but also to engage the material in a more effective manner so that the terrain can be moved, opened up and penetrated more easily.

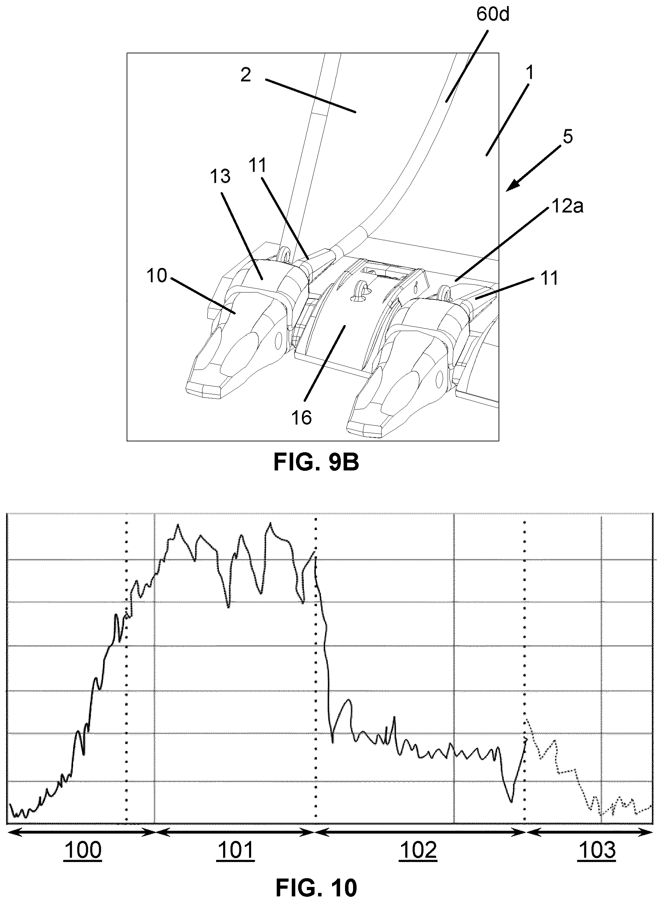

A multiplicity of wear elements is typically arranged on the digging implements, for example lips, adapters, teeth, wear caps, shrouds. Each of these wear elements receives force of high magnitude from the ground material, which produces torque on the wear elements. And since different wear elements are mechanically coupled together, the force and torque are both transferred between wear elements. Depending on the intensity of the force and torque, and as the time goes by, the wear elements eventually break and may even fall off from the digging implements. The intensity of the force is especially high during hit, scratch and loading operations as illustrated in Figure 10, which shows the magnitude of force measured by a single sensor in a wear element during the duty cycle of an earth moving machine.

Replacement of the wear elements is necessary, but it is very important to timely decide or know when to conduct the replacement so as to avoid the possibility of damaging the digging implements and the possibility of loading broken wear elements in the digging implements together with the ground material. What is more, predictive maintenance and operating the machine to reduce the frequency with which the wear elements must be replaced is likewise very important. With predictive maintenance, the machine can be operated more safely, cost and time savings and using all its ground engaging capacity. Optimized management of the wear elements achieves a greater efficiency of the machine, especially in terms of availability of the machine, as there are fewer occasions in which the machine must be halted for unscheduled maintenance or repairment of the wear elements. But not only that, with instantaneous data about the loads on the wear elements it is also possible to improve the efficiency of the machine by making adjustments on how the digging implements are to engage the ground material.

Accordingly, for enhancing the operation of the machine, it is necessary to know how the wear elements operate during their lifetime while the machine is functioning. This means that the strains or forces that the wear elements are subjected to must be known, and not just the intensity thereof but also the direction of application on the wear elements and the points of application.

Sensors are capable of measuring these physical magnitudes, but since they are located within the wear elements, the measurements must be transmitted to other parts of the machine like a control unit or the cabin, or even remote from the machine like a control center. And the transmission must be both complete and fast enough to allow reaction in real time or almost real time, which means that sufficient data must be received and that latency in reception of the measurements must be well below one second (e.g. 100 ms and even less), otherwise reaction to problematic ground engagement can take place once the wear elements or another part of the machine (e.g. the hydraulic system) have been damaged.

Due to space and installation complexity concerns, the transmission of measurements is conducted wirelessly: radiofrequency electronics are installed together with the sensor, and the measurements of the sensor are then sent as electromagnetic wave signals thanks to an antenna.

As not only one wear element is arranged in the machine, the physical magnitudes on most (or each) of the wear elements must be measured and transmitted; this is so because each wear element is subject to an instantaneous load different than that of other wear elements. Although a wireless system can be installed with each sensor, the measurements of all sensors must be transmitted in short time windows so that monitoring of the operation of the machine and corrective action can be taken (if necessary) can take place in (almost) real time.

Coexistence of multiple transmissions within a frequency band, especially considering the demanding transmission requirements and both limited bandwidth and radiation power due to regulated electromagnetic spectrum, makes wireless system not to be completely scalable. But, more importantly, the transmissions tend not to be reliable due to the overlapping of the different electromagnetic wave signals and the losses that the transmission shall overcome to arrive at the receiving device without errors.

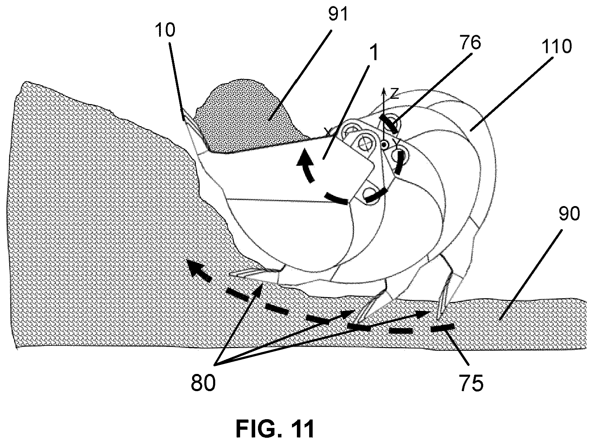

Concerning the losses in transmission, the most mechanically demanding operations (i.e. hit, scratch and load operations) involve the insertion of the wear elements and digging implements within the ground material. The sensors and the radiofrequency electronics are likewise inserted within the ground material, thereby being partially or completely buried in the material. The insertion in material increases the propagation losses of electromagnetic waves. The properties of the material such as the type thereof and the humidity thereof also play a role in the losses, like weather conditions (the propagation losses are greater when there is rain, snow, etc.). By way of example, at 2,4 GHz, the losses for each 10 centimeters in depth that the antenna of the radiofrequency electronics is inserted in the material are 5,6 dB when the material is dry soil, and 27,0 dB when the material is wet soil. Normally a loading operation involves the insertion of the antenna several tens of centimeters or even meters (this can be appreciated, for instance, from the illustration of digging implements of Figure 11), so it is clear that there are significant propagation losses in these conditions.

In order to overcome the losses, the antennas must radiate with greater power, thereby increasing their power consumption. The losses increase even more as the antenna (together with the sensor) is more protected by the wear element, i.e. is placed more inwardly within the wear element, which is desirable to avoid malfunction of the radiofrequency electronics and the sensor owing to the loads exerted on the wear element and particles or fines arriving to these components.

Energy consumption is also an issue, not just because lower power consumption is more environmentally-friendly, but also because wireless systems include energization means, like batteries, so power is limited. As the energization means run out of energy faster, the replacement of the means is more frequent, hence the halting of the machine is also more frequent. And once batteries can no longer be used, they must be recycled so that they are properly taken care of.

Wireless systems thus become a problematic system for reliable and in-time transmission of measurements that are important for an adequate operation of an earth moving machine, especially during the most critical moments of the operation of the machine and when more wear elements must be monitored. The problematic behavior of wireless systems typically appears when data of sensors in multiple wear elements must be transmitted and/or received owing to the high duty cycles in the operation of wear elements. And as the number of sensors within wear elements becomes greater, or the number of wear elements becomes greater (depending on the size of the digging implements and/or the particularities of the ground to be engaged), the global packet error rate increases. When this problem occurs and any corrective action must be taken based on the data that the sensors transmit, either the corrective action gets delayed or is determined with missing data; both consequences may cause the malfunction of the machine or components thereof, damages in any of those beyond repair, etc.

Wired systems cannot be easily integrated in digging implements due to the design concerns they introduce. The wiring will extend from the device that transmits or receives data, or provides electric power, through a large part of the digging implements and/or wear elements. The way in which the wiring is installed in one component of the machine impacts on how it will have to be installed in further components of the machine, and how the components will have to be manipulated for insertion, repair and replacement of the wiring; the latter tasks are complex if they involve time-consuming and cumbersome disassembling of the components, thereby lengthening the time that the machine must be halted. Another design concern is that the wiring could end up obstructing components of the machine and potentially reduce range of motion of the digging implements.

There is a need for one or both of transmitting measurements of sensing devices located in digging implements so that data can be transmitted fast and in a reliable manner, and powering the sensing devices that reduces the number of times that the machine must be halted for maintenance thereof. Regarding the former, self-controlled earth moving machines, i.e. autonomous earth moving machines, can more effectively operate the machines by having more data with less latency.

### SUMMARY

The following aspects are intended to at least overcome the aforesaid problems.

A first aspect of the present disclosure relates to an assembly for an earth moving machine, comprising:
a first member and a second member coupled with the first member, the first member being a wear element for digging implements, the second member being digging implements or a lip for digging implements, the first member comprising: a first cavity adapted to receive at least one sensor, and a channel adapted to receive at least one electric wire; and
at least one electric wire, one or more electric wires thereof being introduced in both the channel and the first cavity, and being attached to the second member.

The assembly, which is adapted to be couplable with the earth moving machine, particularly couplable with e.g. the digging implements (in which case the second member is the lip) or the stick (in which case the second member is the digging implements), has one or more wear elements in which sensors are arrangeable for measurement of physical magnitudes or parameters. And the sensors are capable of at least one of transmitting data to and receiving electrical energy from devices located beyond the digging implements and do so through one or more wired connections.

The wired connection(s) enables transmission of data with no interferences, which is especially troublesome during operation of the earth moving machine. This is even more so in specific moments such as when the machine engages ground and the digging implements are buried in the ground material as these moments are critical for the health of the wear elements and digging implements owing to the load they are subjected to from the ground. The trajectory and the angle of attack of the wear elements and digging implements play a role on the loads exerted thereon so by receiving the data on time it is possible to make adjustments (or not) to the operation of the machine and the digging implements. The wired connection(s) also enables energization of the sensors with a power source not proximate to the sensors and not within the first member.

The channel is formed such that the one or more electric wires goes through the channel with little or no influence on the maneuvering of the digging implements; maneuvers like how the digging implements are moved and rotated. Else, the one or more electric wires could get in the way of different surfaces of the digging implements or other parts of the machine such as the stick, the boom, etc., which would impede certain movements of the digging implements, or not impede them if the digging implements eventually cut the wires or pull them until they break as the implements move.

Limitation of the movements that the digging implements can make causes a reduction in the efficiency of the earth moving machine, not to mention that it makes the machine more difficult to operate with; what is meant by limitation of movements is a reduced envelope of the digging implements (that is to say, the digging implements have a more limited range of motion).

In some embodiments, the channel extends from the first cavity.

The channel extends from the first cavity by having an end within a volume of the first cavity or by having the end adjacent to the first cavity, thereby protecting the at least one electric wire at least where the connection is made, namely where the at least one electric wire connects with the sensor.

Adjacency of the end to the first cavity means that the end is apart from the opening forming the first cavity by a distance not greater than 5,08 centimeters (or 2,0 inches), and preferably not greater than 2,54 centimeters (or 1,0 inch); the distance is zero when the end is within the volume of the first cavity. By reducing the distance, the at least one wire interferes less with other elements of the wear element or with the second member when coupled therewith; it may additionally reduce the length of the at least one wire.

In some embodiments, the one or more electric wires of the at least one electric wire are further attached to the first member. In some embodiments, the one or more electric wires are at least attached to the first cavity for attachment to the first member. In some embodiments, the one or more electric wires are at least attached to a surface of the first member different from the first cavity.

The attachment to the first member reduces even more the possibility of the electric wire(s) getting loose during operation of the machine, something that could cause the failure of the electric wire(s) or get in the way of the digging implements and, thus, reduce its envelope.

In some embodiments, at least a portion of the channel comprises one or more of: a through hole formed in the first member; a through hole formed in material at least partially filling the first cavity; and a slot formed on at least one surface of the first member. In some embodiments, different portions of the channel comprise one or several through holes and/or slots.

The through hole routes the at least one wire towards the second member via a surface different from that where the first cavity is formed, thereby protecting the at least one wire and enabling the use of a different volume for hosting the at least one wire that could be less suitable for sensing different physical magnitudes or parameters due to the location thereof. The through hole may be formed in the first member itself or in material that at least partially fills the first cavity and which is intended to protect the sensor and any other electronics it comprises; the material can be provided by way of a potting process.

The slot routes the at least one wire towards the second member via the surface where the first cavity is formed. The slot also protects the at least one wire since the wire(s) is not directly on the surface of the first member but on a recess.

In some embodiments, at least one end of the channel is on a first surface of the first member opposite a second surface adapted to receive or engage the second member.

Since at least a portion (comprising one end) of the channel goes through an external surface of the first member, the at least one electric wire can be protected even when the first cavity is on an external surface of the first member and it enables the arrangement of a sensor on the external surface.

Such arrangement of the channel also makes possible to conduct installation and maintenance tasks on the at least one electric wire without having to disassemble the assembly and/or the entire digging implements; in fact, in some mines it is forbidden to have operators be underneath the digging implements for safety reasons. If, for instance, one or more wires break during operation of the machine, an operator is able to revise the status of the wires and repair or replace the wires with new wires. The arrangement is also convenient from a measurement standpoint because the concerned portions of the first member are prone to strains, namely unitary deformations, that can be measured with the at least one sensor.

Moreover, said portion of the channel may be located on a part of the first surface that is massive, thereby having a reduced impact on the resistance of the first member. This is even more so when the first member is an adapter.

In some embodiments, the first cavity is formed on the first surface.

The arrangement of the sensor on an external surface of the first member makes possible to measure some parameters or to measure them with more accuracy than if the sensor were to be arranged on an inner surface of the first member. For example, sensing of the type of material engaged, the humidity thereof, etc. Further, like with wires, when the first cavity is on the external surface, the sensor is more accessible to an operator that conducts installation and maintenance of the sensor; when the first cavity in on an internal surface, having access to the sensor typically requires the detachment and withdrawal of one or more elements first.

In some embodiments, the second member is the lip; the assembly further comprises a third member, the third member being the digging implements; and the at least one electric wire is further attached to at least one surface of the third member.

The wiring goes from the wear element to the digging implements passing through another wear element, particularly the lip. This means that the wiring is not limited to only reach wear elements immediately adjacent to the digging implements but rather can reach wear elements coupled with other wear elements. In this way, the sensing can be conducted further beyond the digging implements and with the wear elements coming into contact with the ground. In such wear elements, there is usually even less space available for allocating devices such as antennas and batteries. The problem of transmitting and receiving data wirelessly is exacerbated in these wear elements.

In some embodiments, the wear element comprises one of: an adapter, a cast nose, a weld-on nose or a shroud. A cast nose is, as known in the art, a wear element that is made up of a fitting structure, which fits with another wear element, like a tooth, and an attaching part for attaching the cast nose to the lip.

In some embodiments, the wear element comprises the adapter; the channel at least extends from the first member to the second member, preferably through an upper surface of the two members; the first member and/or the second member has an opening formed on a surface thereof. In these embodiments, the at least one electric wire goes through the opening to reach a coupling region where the lip couples with the digging implements; and/or the channel further extends to the opening formed on the surface of the first member and/or the second member to reach the coupling region.

The electric wiring may be routed to the digging implements and other parts of the machine through the coupling region, which is an interface between the lip and the digging implements. The electric wiring preferably reaches the underside of the digging implements by being routed to the coupling region.

In the coupling region, the wiring may be arranged such that it goes in a transverse direction of the digging implements so as to arrive at one of two lateral sides of the digging implements. Moreover, in some embodiments, the assembly further comprises a protecting device attached to the coupling region to protect the at least one electric wire from contacting e.g. the ground. The protecting device can extend throughout a portion or the entirety of the coupling region in the transverse direction of the digging implements to protect the at least one electric wire and other components, if any, when routed to a lateral edge of the digging implements.

In some embodiments, the wear element comprises the cast nose or the weld-on nose; the channel being a first channel; the second member is the lip; and the first and/or the second member comprises a second channel that at least extends through the first and/or the second members, particularly it at least extends from a portion or an end of the first channel to a recess or groove at a rear end of the lip. In these embodiments, the at least one electric wire goes through both the first and second channels to reach the recess or groove.

The electric wiring goes through the second channel that is formed inside the first member and/or the second member. The first channel connects with the second channel to receive the electric wiring therewithin to reach the recess or groove of the lip that is usually formed on the underside of the lip. In this regard, each nose has its respective recess or groove at the rear end of the lip, the recess or groove being typically aligned or substantially aligned with the respective nose.

The recesses or grooves are recessed portions within the lip that have some free space where the at least one electric wire can go through, and provides some protection from the material engaged during operation of the machine. Yet, in some embodiments, the wear element further comprises a protecting device attached to the recess or groove to further protect the at least one electric wire and other components, if any, from contacting e.g. the ground.

In some embodiments, the second member comprises one or more third channels, each third channel extending between a respective pair of neighboring recesses or grooves. In these embodiments, the at least one electric wire goes through at least one of the one or more third channels, preferably until the respective electric wire reaches the recess or groove of a corner nose, namely the nose closest to one of the edges of the lip and the digging implements.

The electric wiring may be routed to a lateral side of the digging implements by using one or more third channels to go along the transverse direction of the digging implements. From that lateral side, the electric wiring is preferably routed to an upper part of the digging implements and other parts of the machine.

In some embodiments, one or more protecting tubes are introduced in each second channel, and/or in each third channel.

The electric wiring goes through both the channel and the protecting tube, thereby reducing the risk of the wire(s) getting damaged.

In some embodiments, at least a portion of the channel of the first member further extends through a cavity between one or more first surfaces of the first member and one or more second surfaces of the second member.

The wiring goes through the space available between the two members, when they are coupled therewith, so as to be protected from wear thanks to the presence of one of the first and second members that will contact the ground rather than the at least one wire. This is achieved without having to form additional cavities on the members, so the at least one wire benefits from the coupling of the members and the space formed therebetween to extend and be routed towards other parts of the machine.

In some embodiments, the second member comprises a channel adapted to receive at least one electric wire. In some embodiments, the channel of the first member is arranged such that an end thereof contacts an end of the channel of the second member.

The second member may include its own channel for routing one or more electric wires.

In some embodiments, the assembly further comprises one or more protectors attached to at least one surface of the first or second member, both the at least one surface and the one or more protectors being shaped such that a second cavity is formed between the at least one surface and each of the one or more protectors; and one or more wires of the at least one electric wire is introduced in at least one of the second cavities.

Each protector is adapted to protect the wiring or a tee connector as described below, which is included in assemblies in some embodiments. Each protector covers part of the at least one wire as it goes over a surface of at least one of the members and is, thus, exposed to the wear, or covers the tee connector. Each protector, which is preferably from steel, and more preferably from steel that is adapted to be weldable and resistant against wear like Hardox 500, attaches to the surface so as to cover the wiring or tee connector. To this end, the protectors are shaped to form the second cavity through which the wire passes or where the tee connector is located.

In some embodiments, the assembly further comprises a plurality of the first members. In some embodiments, the second member is coupled with the plurality of first members; the assembly further comprises N tee connectors, with N being equal to or greater than a number of first members in the plurality of the first members minus one; the N tee connectors are electrically connected between them in a cascaded manner; the at least one electric wire at least comprises as many electric wires as first members are in the plurality, and each electric wire is electrically connected with one of the N tee connectors. In some embodiments in which the assembly comprises one or more protectors, at least one of the protectors covers one tee connector such that each tee connector is within the second cavity.

The wiring reaches the different first members in a distributed manner and with less wiring with the use of tee connectors connected in cascade. The tee connectors connect three different wires so the connection of one tee connector to another connector is made such that each tee connector is simultaneously connected with two tee connectors except for the first and last tee connectors. One wire can extend from each tee connector towards one first member. Since the last tee connector is not connected with two connectors, two of its terminals can be used for connection of wiring towards two first members.

Notwithstanding, it will be noted that other tee connector configurations are possible for wiring the first members that also fall within the scope of the present disclosure; for instance, N may be equal to the number of first members, and each tee connector is connected with a single first member.

Cascade configurations are particularly convenient for transmissions of data in a bus-like manner.

In some embodiments, the N tee connectors are arranged in the coupling region.

In some embodiments, each tee connector of the N tee connectors is arranged in a respective recess or groove.

The coupling region and the recesses or grooves provide free space for receiving the electric wiring and the tee connectors. Further, these locations are protected from the engaged material, thus the risk of the tee connectors getting damaged is lower.

By arranging the tee connectors in either the coupling region or the recesses, the electric wiring can be connected and, at the same time, route the wiring to a lateral side of the digging implements from where the wiring will then extend to other parts of the machine.

In some embodiments, the assembly further comprises an additional member (e.g. third member, or fourth member), the additional member being a wear element adapted to be attached to the first element and to cover the first cavity.

The first cavity can be arranged such that the additional member also serves the function of protecting the sensor(s) within the cavity and the electrical wiring present in the cavity.

In some embodiments, the assembly further comprises the at least one sensor, each sensor of the at least one sensor being introduced in one first cavity. In some embodiments, the at least one sensor or each sensor of the at least one sensor is configured to sense one or more of: strain, wear, pressure, temperature, acceleration, position (e.g. a GPS), material/terrain (for identification thereof), and falling off of a wear element.

The measurements of the sensor, either processed (if the sensor includes a computing device configured to process the measurements and output data resulting from the processing) or not, can be transmitted to other parts of the assembly or the machine by way of the wiring. Additionally or alternatively, the at least one sensor is powered through the wiring.

In some embodiments, the channel comprises a maximum opening that is not greater than 1,27 centimeters.

A maximum size of the opening thereof does not exceed 1,27 centimeters (i.e. half an inch), and preferably does not exceed 1,0 centimeters, in this way the mechanical properties of the first member are more similar to the ones it would have without the channel. In the context of the present disclosure, the maximum size of the opening refers to a maximum diameter or length (the latter is if the opening is not circumferential) among all cross-sections of the channel.

In some embodiments, the one or more electric wires are attached to the second member and (in some of the embodiments in which the one or more electric wires are also attached to the first member) to the first member by way of one of the following: adhesive (e.g. silicone), introduction in a protector as disclosed above, introduction in the cavity formed between two members, or friction between the electric wire and the member that it is attached to.

A second aspect of the present disclosure relates to an earth moving machine comprising one or more assemblies according to the first aspect of the present disclosure.

The earth moving machine has digging implements that are protected by way of the assembly, and have the capacity of measuring parameters and magnitudes with sensors arranged in one or more wear elements of the assembly. Moreover, owing to the assembly, measurements of the sensors can be reliably transmitted to different parts of the machine with high data rates and bandwidths and no interferences, and/or the sensors may be electrically powered without batteries arrangeable in the assembly itself.

In some embodiments, the machine further comprises: a wires connection panel; and a control unit electrically connected with the wires connection panel; an end of one or more electric wires of the at least one electric wire is electrically connected with the wires connection panel; and an end of one or more electric wires of the at least one electric wire is electrically connected with one or more sensors of the one or more assemblies, thereby making data to be transferrable between each connected sensor and the control unit.

The wires connection panel simplifies the management of the wiring and the routing of the wiring towards different parts of the machine, including the assembly. These, in turn, result in an even more reduced limitation in the possible maneuvers that a reduced envelope of the digging implements would cause, that is so because the wiring does not get in the way of the digging implements and other parts of the machine such as the stick, the boom, etc.

The wires connection panel can be arranged on the digging implements, preferably on an external side thereof and on a surface adjacent or proximate to (e.g. at a distance not greater than 2 meters, 1 meters, or even less) a location where the digging implements are coupled with the stick of the machine. The wires connection panel can likewise be arranged on the stick itself.

In some embodiments, each connected sensor is configured to transmit and/or receive data at a rate equal to or greater than 512 kbps.

In this sense, the one or more electric wires are preferably arranged in a bus configuration whereby the transmission and reception of data is according to a bus configuration, for example a bus configuration like Modbus. This enables cost-efficient wiring of the earth moving machine for a number of sensors while providing data rates of 512 kbps or even greater per sensor, and even for transmission lengths of up to 100 meters or more. manages the bus.

Either the control unit, which is connected with the electric wire(s) and is configured to transmit and/or receive data, or a separate controller of the machine, manages the bus, and preferably does so such that it enforces a maximum bus load between 60% and 80% (the endpoints being included in the range) of its load capacity. Such configuration, which leaves part of the load capacity available, reduces the number of collisions between packets, in turn avoiding packet loss and/or minimizing the global packet error rate..

In wireless systems for earth moving machines, there is low reliability in transmissions at the above data rates, and the reliability reduces even more as the number of sensors and/or the data rates become greater. The number of sensors is limited in wireless systems owing to the quantity of packets that do not arrive at the receiving device, or that arrive but with errors. A way of addressing this problem to some extent in wireless systems is by increasing the transmission power (but the limited bandwidth of the channel might be a problem as well), reducing the number of sensors, or transmit less data per unit of time, all of which have considerable drawbacks: greater batteries are necessary or the batteries be replaced more frequently, and less data available to monitor the operation of the machine, to name a few.

In some embodiments, the control unit is configured to operate the earth moving machine based on data received from each connected sensor.

The control unit processes the data received from the connected sensors, which as aforesaid are within wear elements, so as to determine how the wear elements and digging implements are behaving or what are the characteristics of the material engaged. After the control unit has made such determination, it derives one or more instructions (if determined to be necessary given the measurements) to adjust the operation of the machine, for example one or more of the following: adjust the force applied by the machine, change an angle of attack of the digging implements, and change a trajectory of the digging implements.

The control unit may have a plurality of predetermined thresholds set therein, and make the determination of the behavior of the wear elements and digging implements when it comes to either the forces each one of them is withstanding, or the wear that they have been subjected to at that point in time. Depending on whether the forces or the wear of one or more sensors exceed one, some or all predetermined thresholds (e.g. predetermined excessive force thresholds), and/or the calculated force is less than an optimal operating level (e.g. predetermined optimal force thresholds), the instructions derived are ones or others.

The control unit may assist the operator of the machine by means of instructions for automatically adjusting, regulating and correcting at least one of the force to be applied by the machine, the angle of attack of the digging implements and the trajectory of the digging implements. Such instructions assist the operator in conducting the excavation and loading operation in the most optimal and productive manner based on the predetermined thresholds set in the control unit, including the reduction or avoidance of breakage of the wear elements and/or the digging implements. This, in turn, prevents unscheduled stoppages thereby improving the cost per ton moved.

The way in which the adjustment, regulation and correction are carried out is by applying more or less force to the digging implements when engaging the ground (i.e. more or less pressure is applied to the cylinders of the hydraulic system), by changing the angle of attack with which the digging implements contact the ground during the excavation and load operation, and/or by changing the trajectory the digging implements follow during the excavation and load operation, the latter being achieved by moving the boom and the stick of the machine.

The processing carried out by the control unit preferably includes performing machine learning so as to progressively determine more accurately the status and operation of the wear elements and, optionally, of the machine as well, which in turn enables the provision of instructions better tailored to the situation in which the wear elements and the machine are in. In this respect, the control unit is capable of using historical data of operation of the wear elements and/or the machine, inputs from the machine received during operation of the machine and/or historical data thereof, etc.

A third aspect of the present disclosure relates to a method comprising:
arranging a first member, the first member being a wear element for digging implements of an earth moving machine, the wear element comprising a first cavity adapted to receive at least one sensor and a channel adapted to receive one or more electric wires;
coupling the first member with a second member, the second member being digging implements or a lip for digging implements of an earth moving machine;
introducing one or more sensors of the at least one sensor in the first cavity;
electrically connecting an end of the one or more wires of at least one electric wire with one or more sensors of the at least one sensor;
introducing at least a first portion of the one or more wires in the channel; and
attaching at least a second portion of the one or more wires to the second member.

The method makes possible to incorporate sensors in wear elements of an earth moving machine that are to transmit the measurements to and/or are to be electrically powered from different parts of the machine via at least one electric wire.

In some embodiments, the method further comprises attaching the first portion and/or a third portion of the one or more wires to the first member; for instance, attached to the first cavity or to a surface of the first member different from the first cavity.

In some of these embodiments, the method further comprises at least partially filling the first cavity with material (e.g. resin) by means of potting.

In some embodiments, the channel extends from the first cavity.

In some embodiments, at least a portion of the channel comprises one or more of: a through hole formed in the first member; a through hole formed in material at least partially filling the first cavity; and a slot formed on at least one surface of the first member.

In some embodiments, at least one end of the channel is on a first surface of the first member opposite a second surface adapted to receive or engage the second member.

In some embodiments, the first cavity is formed on the first surface.

In some embodiments, the wear element comprises one of: an adapter, a cast nose, a weld-on nose or a shroud.

In some embodiments, the wear element comprises the adapter; the channel at least extends from the first member to the second member, preferably through an upper surface of the two members; the first member and/or the second member has an opening formed on a surface thereof. In these embodiments, the method further comprises introducing the second portion or a third portion of the one or more wires in the opening to reach a coupling region where the lip couples with the digging implements. Additionally or alternatively, the channel further extends to the opening formed on the surface of the first member and/or the second member to reach the coupling region.

In some embodiments, the wear element comprises the cast nose or the weld-on nose; the channel being a first channel; the second member is the lip; and the first and/or the second member comprises a second channel that at least extends through the first and/or the second members, particularly it at least extends from a portion or an end of the first channel to a recess or groove at a rear end of the lip. In these embodiments, the method further comprises introducing the second portion or a third portion of the one or more wires in the second channel to reach the recess or groove.

In some embodiments, the second member comprises one or more third channels, each third channel extending between a respective pair of neighboring recesses or grooves. In these embodiments, the method further comprises introducing the second portion or a third portion of the one or more wires in at least one of the one or more third channels, preferably until the respective wire reaches the recess or groove of a corner nose.

In some embodiments, the method further comprises introducing one or more protecting tubes in each second channel, and/or in each third channel.

In some embodiments, at least a portion of the channel of the first member further extends through a cavity between one or more first surfaces of the first member and one or more second surfaces of the second member, and the at least second portion is attached to the second member in the cavity formed between the one or more first surfaces and the one or more second surfaces.

In some embodiments, the second member is the lip; the method further comprises: coupling the second member with a third member; and attaching at least a third portion of the one or more wires to a third member such that each of the one or more wires is routed towards a stick of the earth moving machine, the third member being the digging implements.

In some embodiments, the second member comprises a channel adapted to receive at one or more wires; and the method further comprises introducing at least the second portion or a third portion of the one or more wires in the channel of the second member. In some embodiments, the channel of the first member is arranged such that an end thereof contacts an end of the channel of the second member.

In some embodiments, the method further comprises: arranging a wires connection panel and/or an electrical power source on the digging implements or a stick of the machine; and electrically connecting an end of one or more of the at least one electric wire with the wires connection panel and/or the electrical power source so that data and/or electric power is transferrable between the at least one sensor and the wires connection panel and/or the electrical power source.

In some embodiments, the method further comprises: arranging a control unit in the earth moving machine; electrically connecting the control unit with the wires connection panel; measuring, with each of the at least one sensor, one or more parameters or physical magnitudes during operation of the earth moving machine; transmitting measurements from each connected sensor to the control unit through the at least one electric wire; processing, by the control unit, the measurements received so as to determine at least one of forces and wear that each sensor has been subjected to; and based on the determination made, deriving, by the control unit, one or more instructions to operate the earth moving machine.

In some embodiments, the transmission of measurements takes place at least while the earth moving machine engages (i.e. is being inserted in and/or is inserted in) ground.

The wireless transmission of data, for instance measurements of sensors, typically cannot take place in a reliable manner and/or with sufficient data rates while the earth moving machine scoops material, for instance ground, because the material itself produces losses while the radiofrequency electronics are partially or completely buried therewithin.

During a considerable part of the duty cycle of the earth moving machine, the wear elements are partially or completely buried. It is during this part of the duty cycle when the wear elements and digging implements undergo the worst mechanical problems. In addition to fines, particles, etc., the forces exerted on the wear elements also reach sensors. The main reason why the wear elements are typically introduced within deep cavities of the wear elements in the prior art is for protection of these phenomena. Wireless transmissions of antennas that are well inside the wear elements suffer the effect of a Faraday cage, and so the transmission must overcome both the additional losses of a Faraday cage as well and those due to the antenna being buried in the material to be loaded, not to mention air propagation losses that depend upon the environment and meteorology.

Measurements related to the forces and loads that the wear elements are subject to should be provided with sampling rates equal to or greater than 20 Hz when said measurements are to be used for adjusting the operation of the machine in real time or almost real time, especially during the most demanding situations as explained above. Delay (e.g. 200 ms, 500 ms, 1 s, etc.) in the adjustment of the operation of the machine may make the difference between experiencing failure (e.g. breaking) or falling off of wear elements and avoiding such events; for example, a quick reaction in the form of change in the angle of attack of the digging implements, or reduction in the force applied by the digging implements in the material, can avoid that one or more wear element break.

As aforesaid, in order to overcome this limitation in wireless systems, greater transmission power is necessary, thereby requiring the use of more energy, or moving the receiving device closer to the transmitting device, which is something that is usually impossible. By contrast, the wired connection provides a reliable communication channel even while the radiofrequency electronics are buried within the material.

In some embodiments, the method further comprises making available measurements of each sensor at the control unit or a cabin of the earth moving machine at a data rate equal to or greater than 512 kbps.

The controlling of both the digging implements and the machine, and/or the assistance to the operator in the controlling of both the digging implements and the machine, can be in real time or almost real time, whereas with wireless alternatives the communications are not possible or are not reliable enough, which especially limits the operation of autonomous earth moving machines that do not require an operator. In these embodiments, the machine or the operator can quickly react to the incoming measurements and adjust the operation of the machine according to the measurements, e.g. change the trajectory, the angle of attack, etc.

In some embodiments, the one or more instructions comprise one or more of: a force to be applied by the earth moving machine, an angle of attack of the digging implements when engaging ground, and a trajectory of the digging implements when engaging ground.

In some embodiments, the method further comprises attaching one or more protectors (i.e. devices for protection) to at least one surface of the first or second member such that each protector surrounds one or more wires of the at least one electric wire on a side thereof not contacting the first and second members, each protector being shaped in such a way that a cavity is formed between at least one surface thereof facing the respective wire and at least one surface of the first or second member that the protector is attached to.

In some embodiments, the method further comprises: arranging a plurality of the first members and coupling each first member of the plurality of first members with the second member; the at least one sensor comprises at least as many sensors as first members are, and one or more sensors being introduced in the first cavity of each first member; arranging N tee connectors such that they are electrically connected between them in a cascaded manner, with N being equal to or greater than a number of first members in the plurality of the first members minus one; the at least one electric wire at least comprises as many electric wires as first members are in the plurality, and further comprising electrically connecting an end of each electric wire electrically connected with a sensor with one of the N tee connectors.

In some embodiments, the N tee connectors are arranged in the coupling region.

In some embodiments, each tee connector of the N tee connectors is arranged in a respective recess or groove.

In some embodiments, the method further comprises attaching an additional member (e.g. third member, or fourth member) to the first member such that it protects the first cavity, the additional member being a wear element.

In some embodiments, the channel comprises a maximum opening that is not greater than 1,27 centimeters.

A fourth aspect of the present disclosure relates to a protector, i.e. a protection device, for electric wiring for an earth moving machine, comprising: a plurality of members mechanically couplable therewith, each member being adapted for attachment thereof to a planar surface, each member is made of steel (e.g. Hardox 500), and each member having a C or U shape for forming a cavity adapted for introduction of electric wiring upon attachment of the member to the planar surface.

The C or U shape provides the cavity for routing and protecting electric wiring. The protector is weldable to the surface of a wear element or digging implements owing to the material thereof.

In some embodiments, the protector further has rounded edges on an outer surface of the C or U shape.

The rounded edges reduce the wear that the protected is subjected to, thereby increasing the useful life thereof.

A fifth aspect of the present disclosure relates to a wear element for digging implements for an earth moving machine, comprising: a cavity adapted to receive at least one sensor; and a channel adapted to receive at least one electric wire. The wear element is one of: an adapter, a cast nose, a weld-on nose or a shroud.

The wear element is readily installable in a wear element assembly according to the first aspect and in digging implements of an earth moving machine like that described in the second aspect. By introducing a sensor and electric wiring in the wear element, particularly in the cavity and in the channel, a wired connection extending from the sensor to another endpoint within the machine is possible, e.g. for data transmission, for powering the sensor, etc.

In some embodiments, the wear element further comprises the at least one electric wire, and one or more electric wires of the at least one electric wire being introduced in both the channel and the first cavity.

In some embodiments, the wear element further comprises a protector according to the fourth aspect attached to at least one surface thereof.

In some embodiments, the channel is a channel as described in the aspects above.

In some embodiments, the cavity is a channel as described in the aspects above.

In some embodiments, one or both of the channel and the cavity is/are adjacent to means for securing coupling (e.g. a cavity, a through hole, etc.) of the wear element with another wear element or digging implements.

A sixth aspect of the present disclosure relates to a wiring assembly for an earth moving machine, comprising: at least one electric wire; and a protector according to the fourth aspect of the present disclosure, the protector being arranged so as to cover one or more electric wires of the least one electric wire.

In some embodiments, the wiring assembly comprises a wear element according to the fifth aspect of the present disclosure, the protector being attached to the wear element.

A seventh aspect of the present disclosure relates to digging implements for an earth moving machine, comprising:
one or more assemblies according to the first aspect; and/or
one or more protectors according to the fourth aspect; and/or
one or more wear elements according to the fifth aspect; and/or
one or more wiring assemblies according to the sixth aspect.

An eighth aspect of the present disclosure relates to an earth moving machine comprising:
one or more protectors according to the fourth aspect; and/or
one or more wear elements according to the fifth aspect; and/or
one or more wiring assemblies according to the sixth aspect; and/or
digging implements according to the seventh aspect.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figures 1 and 3 show cross-sections of adapters of assemblies in accordance with embodiments, and Figures 2A-2B show an adapter and a cross-section thereof of assemblies in accordance with embodiments.
Figure 4 shows a cross-section of an assembly in accordance with embodiments.
Figures 5A-5B and 6 show assemblies in accordance with embodiments.
Figure 7 shows a tee connector and protectors of assemblies in accordance with embodiments.
Figures 8A-8D show cross-sections of protectors in accordance with embodiments.
Figures 9A-9B show an assembly in accordance with embodiments.
Figure 10 shows a graph with a force measured by a sensor of an assembly in accordance with embodiments.
Figure 11 diagrammatically shows ground engaging and material scooping with digging implements.
Figures 12A-12E show different views of an assembly (and digging implements) in accordance with embodiments.
Figures 13A-13F show different views of an assembly (and digging implements) in accordance with embodiments.
Figure 14 shows an assembly (and digging implements) in accordance with embodiments.

### DETAILED DESCRIPTION

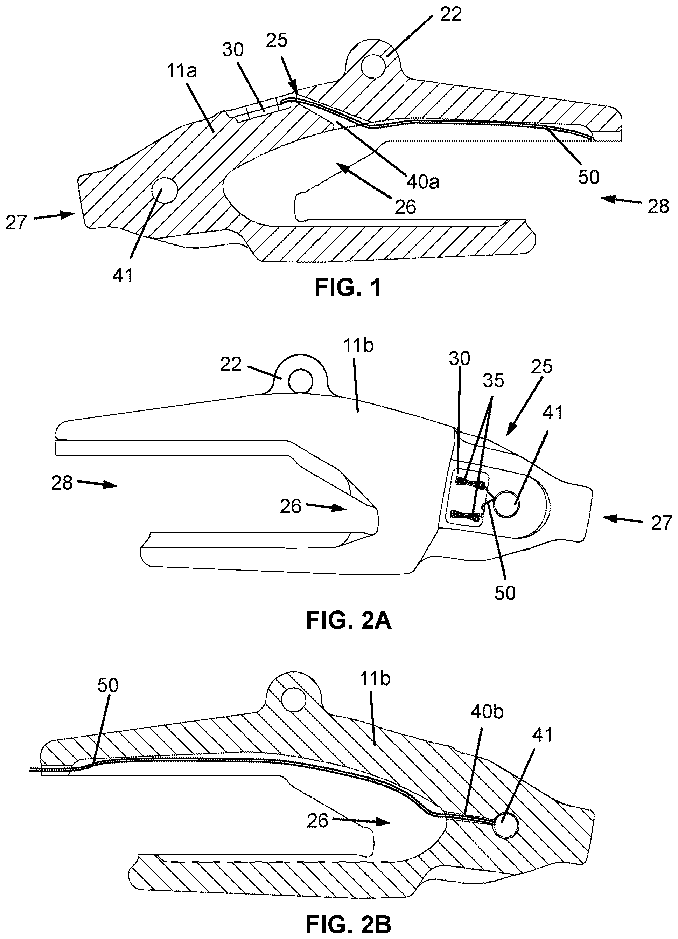

Figure 1 shows a cross-section of an adapter 11a of assemblies in accordance with embodiments. The adapter 11a, which is a wear element for an earth moving machine, has a first end 27 adapted for coupling with another wear element, e.g. a tooth, an intermediate adapter, etc., and a second end 28 opposite the first end 27 adapted for coupling with digging implements, e.g. bucket, shovel, dredgehead, etc. for instance a plate lip or a blade thereof. The adapter 11a can be coupled with the digging implements more reliably by way of welding or be cast thereon as known in the art. In this embodiment, the first end 27 comprises a male portion (but in other embodiments the first end 27 comprises a female portion) and the second end 28 is an attaching end.

The adapter 11a also comprises means 41 for securing the coupling with the other wear elements; in this case, the means 41 are a through hole for receiving a pin that also goes through a tooth when coupled with the adapter 11a. Other means 41 are also possible as known in the art. The adapter 11a also comprises a lifting eye 22 as it is customary in the art.

The adapter 11a has a cavity 30 adapted for receiving a sensor formed on a first surface 25, particularly an external surface of the adapter 11a that the ground material usually reaches during operation of the earth moving machine even if it is the teeth the devices directly hitting the ground. The first surface 25 is a top-most surface of the adapter 11a. The cavity 30 is a recess on said surface.

The adapter 11a further has a channel 40 in the form of a through hole going from the first surface 25, more particularly from the cavity 30, to a second surface 26 opposite the first surface 25. The second surface 26 is an internal surface, particularly a surface that in this embodiment is of a cavity for receiving the digging implements. The channel 40 is adapted to receive at least one electric wire.

Thanks to the channel 40, one or more electric wires 50 of the assembly can go from a sensor when installed in the cavity 30, and through the adapter 11a reach the digging implements or even another wear element. Like in some of the following embodiments, the electric wire(s) 50 go to the rear part of the adapter 11a, namely towards the second end 28, something that may additionally protect the electric wire(s) 50 with the adapter 11a itself.

Figure 2A shows an adapter 11b of assemblies in accordance with embodiments, and Figure 2B shows a cross-section of the adapter 11b.

In the adapter 11b, the cavity 30 for the sensor is formed on the first surface 25 but on a side of the adapter 11b. In this embodiment, the cavity 30 is formed adjacent to the through hole 41 for receiving a pin.

One or more electric wires 50 extend from each one of the sensors 35 (in this case there are two sensors 35 within the cavity 30) to an internal surface 26 of the adapter 11b through the through hole 41, and through a channel 40b (seen in Figure 2B) extending from an inner part of the through hole 41 towards the second end 28 until it reaches the internal surface 26. When the adapter 11b is coupled with a lip or digging implements, the one or more electric wires 50 can attach to a surface thereof so as to be routed towards other parts of the earth moving machine.

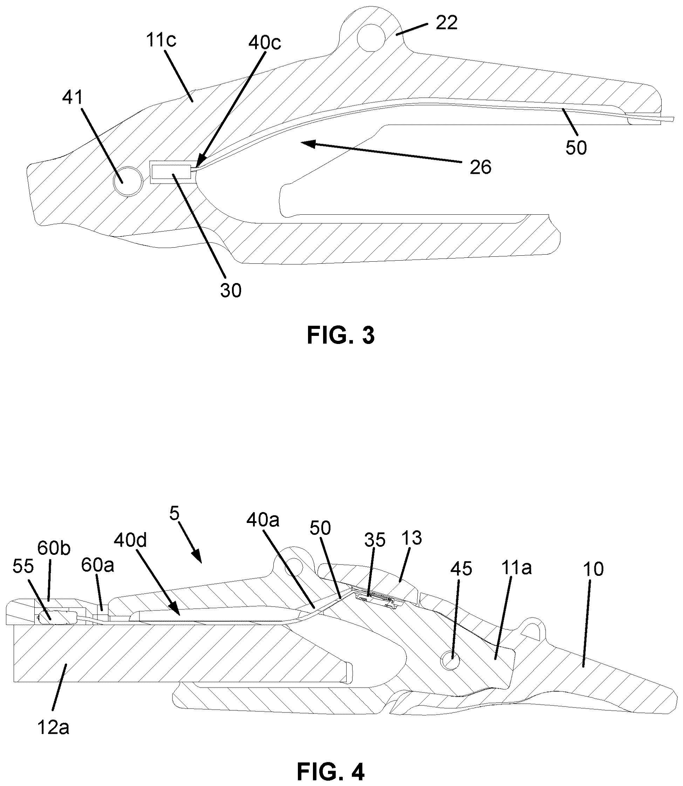

Figure 3 shows a cross section of an adapter 11c of assemblies in accordance with embodiments.

The adapter 11c comprises a cavity 30 for a sensor formed in the internal surface 26, and a channel 40c extending therefrom towards the internal surface 26 so that one or more electric wires 50 of the assembly to be electrically connected with the sensor(s) within the cavity 30 can reach other parts of the earth moving machine. In this case, albeit not seen, the cavity 30 is filled with material such as e.g. resin by way of a potting process. The potting is conducted once the sensor is already inside the cavity 30, and the channel 40c goes through the material of the potting process so as to extend from the sensor to the internal surface 26.

The cavity 30 is preferably formed such that it is adjacent to the through hole 41, at a front-most part (i.e. the closest to a ground-engaging end) of the cavity that receives the other wear element or digging implements.

Figure 4 shows an assembly 5 in accordance with embodiments.

The assembly 5 comprises a first member and a second member. The first member is an adapter 11a as described in relation to Figure 1, but could likewise be an adapter 11b, 11c as described in relation to Figures 2A, 2B and 3, or a different wear element. The second member is a plate lip 12a for digging implements. The assembly 5 may include a multiplicity of adapters 11a coupled or couplable with the plate lip 12a, thereby making possible to measure parameters with sensors 35 at each adapter 11a and provide one or more electric wires 50 from each one of the sensors 25 towards the plate lip 12a and further beyond than the plate lip 12a itself, e.g. the stick, the boom, the cabin, another surface of the digging implements, etc.

The assembly 5 may likewise comprise teeth 10 coupled or couplable with the adapter(s) 11a with the aid of a pin 45, and/or intermediate adapters (for coupling teeth therewith), and/or wear caps 13. Regarding the latter, in preferred embodiments like the one of Figure 4, the cavity 30 for the sensor 35 is formed on an external surface of the adapter 11a such that the wear cap 13 is coupled to said surface and protects the cavity 30; wear caps 13 protect both the adapter 11a and the sensor 35.

As it can be seen in Figure 4, the channel 40a of each adapter 11a also extends between an internal surface of the adapter 11a and an external surface of the plate lip 12a, where a channel cavity 40d is formed when the two wear elements are coupled together. The wiring 50 goes through the channel cavity 40d so as to go towards the rear end of the plate lip 12a.

The assembly 5 may also comprise a protector 60a adapted to be attached to a surface of the second member. The protector 60a forms a cavity of its own between itself and the surface of the plate lip 12a. One or more electric wires 50 go through the cavity of the protector 60a. When the earth moving machine engages ground, the excavated material reaches the protector 60a but not the electric wire(s) 50. The protector 60a is preferably arranged such that it starts to protect the electric wire(s) 50 from the location that the cable exits the first member, so for example immediately after reaching a rear end of the adapter 11a. The electric wire(s) 50 may connect with a tee connector 55 as illustrated in this embodiment, whereas in other embodiments no tee connectors are provided. A protector 60b for the tee connector 55 is preferably arranged when the assembly includes tee connectors 55.

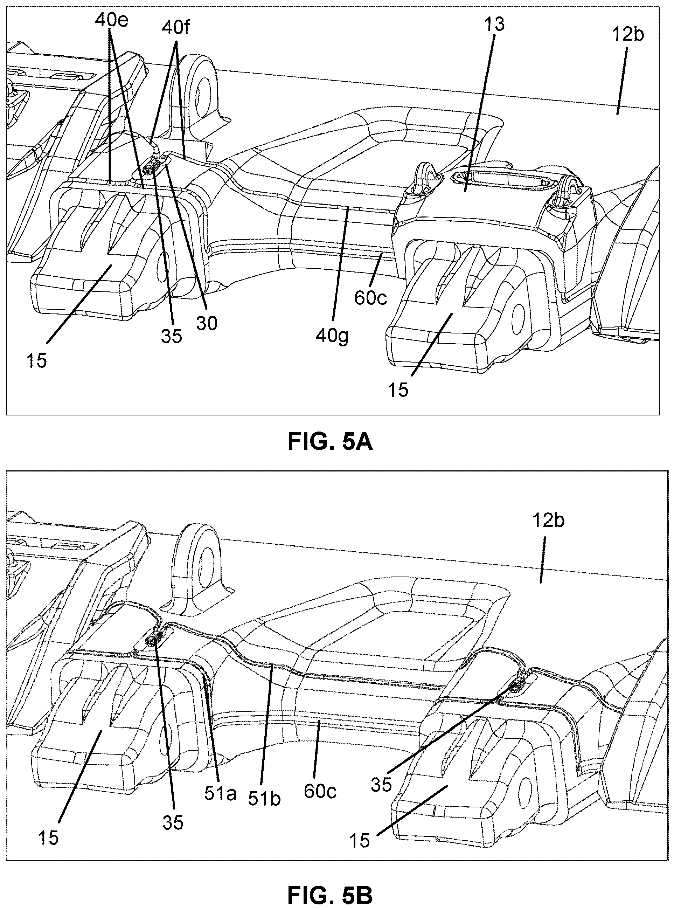

Figures 5A and 5B show an assembly in accordance with embodiments; in Figure 5B a wear cap 13 is not shown and electric wires 51a, 51b are shown for the sake of clarity.

The assembly comprises a plurality of first members in the form of a cast noses 15 (but could likewise be weld-on noses) and a second member in the form of a lip 12b, e.g. a cast lip, which is couplable with digging implements. The assembly comprises or may comprise other wear elements such as teeth, shrouds and wear caps 13.

Each nose 15 comprises a cavity 30 for receiving a sensor 35, the cavity 30 being formed at a same location as for the adapter 11a of the embodiments of Figure 1. The nose 15 also comprises a plurality of channels 40e or a plurality of channels 40f for receiving one or more electric wires 51a, 51b, in this case as slots. In some embodiments the plurality of channels 40f is formed, and in some other embodiments the plurality of channels 40e is formed.

Further, in these embodiments, the lip 12b may also comprise channels 40f as slots formed on a front surface of the lip 12b, particularly between each pair of noses 15 of the lip 12b.

The assembly further includes electric wires, and for the sake of clarity two alternate wiring 51a, 51b options are illustrated, each of which being included in one or other embodiments and corresponding to one or other options between the channels 40e and channels 40f.

In some embodiments, a first type of wiring 51a is part of the assembly whereby one or more electric wires 51a go from the cavities 30 of sensors to other cavities 30 of sensors passing through the channels 40e. The electric wire or wires 51a can be protected in the front of the lip 12b by means of a protector 60c; the lip 12b may also comprise a channel (not illustrated) formed in this part and, in those embodiments in which the protector 60c is arranged, it is in or over said channel.

In some other embodiments, a second type of wiring 51b is part of the assembly whereby one or more electric wires 51a go from the cavities 30 of sensors to other cavities 30 of sensors passing through the channels 40f formed as slots on the top external surface of the nose 15, and connecting with the channel 40g that in some embodiments the lip 12b has formed on the top external surface thereof as a slot, particularly between each pair of cavities 30.

As it can be observed in Figures 5A and 5B, and like in some of the following embodiments, the electric wires 51a, 51b go to the side from the respective cavities 30.

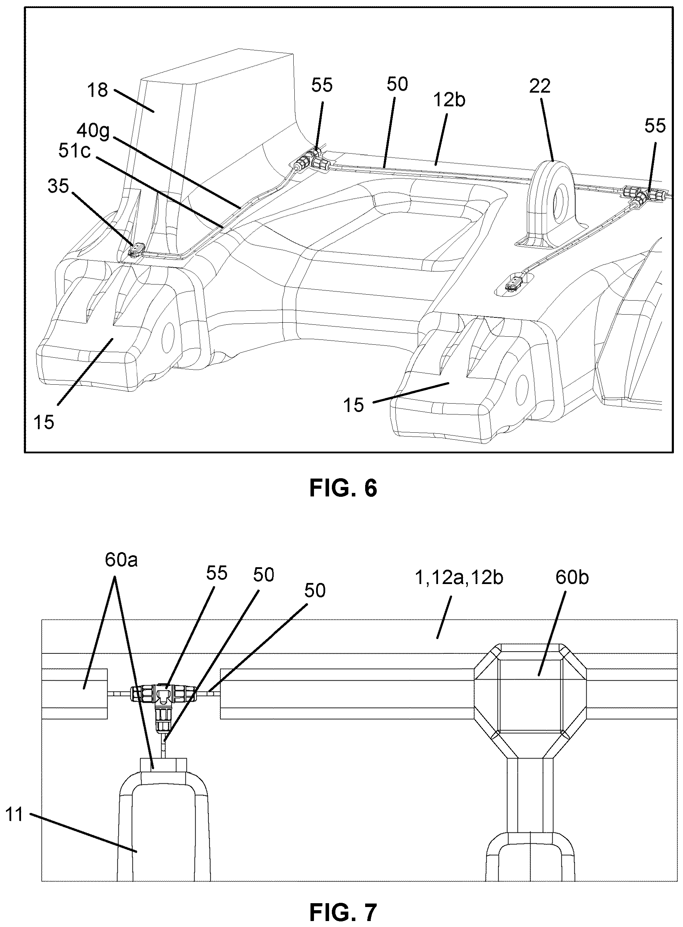

Figure 6 shows an assembly in accordance with embodiments.

The assembly is similar to that shown in Figures 5A-5B, but also illustrates another type of wiring 51c and channels 40g present in assemblies according to other embodiments. The third type of wiring 51c goes through channels 40g formed as slots on the top external surface of the cast nose 15 (or weld-on nose in other embodiments) but following substantially the longitudinal direction of the noses 15. In this manner, the one or more electric wires 51c extend from the cavities 30 to a rear-more part of the nose 15 so as to reach the lip 12b (e.g. a cast lip), thus being more proximate to the digging implements.

The channels 40g can go adjacent to the lifting eyes 22 so that neither the lifting eyes 22 are mechanically influenced by the channels 40g, nor the electric wiring 51c gets entangled on the lifting eyes 22. The channels 40g for the side portions 18 of the lip 12b (shown one on the left) can go through the side thereof.

Additionally, the assembly comprises a plurality of tee connectors 55 arranged in cascaded form so that the one or several electric wires 51c can reach the sensor 35 in each cavity from the rear-more part of the lip 12b saving wiring. In this sense, the tee connector 55 on the left has first one or more electric wires 50 going towards the inside of the page (on the top of the drawing), which are intended to connect all the sensors 35 with a wires connection panel, and/or a control unit, and/or a power source, etc. In some embodiments, the tee connectors 55 of both sides have such electric wire(s) 50 so that connection is attained through both sides, whereas in some other embodiments the connection is made from one side only. Said tee connector 55 likewise has second one or more electric wires 51c going therefrom towards the sensor on the left-side most part of Figure 6, and third one or more electric wires 50 that are electrically connected with another tee connector 55, which in turn connects with another tee connector 55 and one sensor, and so on. The use of tee connectors 55 is preferred when bus-like configurations are to be used; in other embodiments, each electric wire 51c does not connect with any tee connector 55 but connects with something else like a wires connection panel, a control unit, a power source, etc.; this, in turn, requires more wiring and increases the overall weight of the assembly.

Aside from these embodiments, the arrangement of tee connectors 55 may also present in other embodiments, such as embodiments based on Figures 1 to 5B.

Figure 7 shows a tee connector 55 and protectors 60a, 60b of assemblies in accordance with embodiments.

The tee connector 55 has three terminals that are electrically connected. Upon connection of electrical wiring 50 in the terminals, data and/or electric power can be transferred between the different wires 50.

The tee connector 55 can be protected by way of a protector 60b that forms a cavity between itself and a surface where the protector 60b (and tee connector 55) is arranged, for example an external surface of e.g. a plate lip 12a, a cast lip 12b, digging implements 1.

The protector 60b is preferably shaped in such manner that protectors 60a for electric wiring can also be mechanically coupled therewith so as to protect the electric wire(s) 50 before they reach the tee connector 55. The protector 60a for the electric wiring going to the sensor preferably extends from the end of an adapter 11 in this embodiment for full protection of the wire(s) 50.

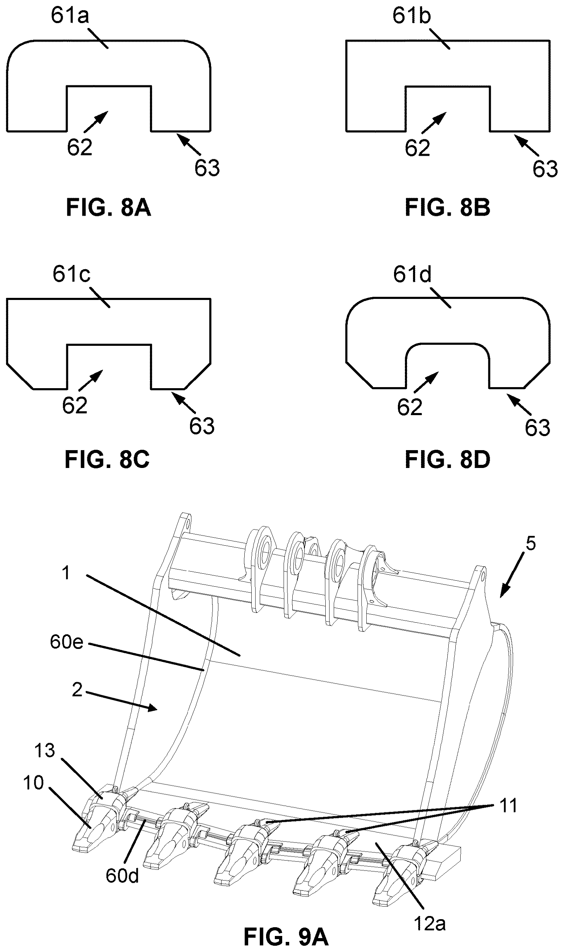

Figures 8A to 8D show cross-sections of protectors 61a-61d in accordance with embodiments, each having a C or U shape with a cavity 62 and a surface 63 adapted to contact the surface of a wear element, a cast lip or digging implements. The different protectors 61a-61d could be used for any protector 60a, 60c, 60d for wiring described with reference to the embodiments of Figures 1 to 7 and Figures 9A and 9B.

A first protector 61a has rounded edges on an outer part thereof so as to avoid excessive wear during operation. A second protector 61b does not include such rounded edges. A third protector 61c has connecting edges between the surface 63 and the lateral edges thereof adapted for easier welding of the protector 61c to the wear element, cast lip or digging implements. A fourth protector 61d is similar to the third protector 61c and also includes the rounded edges of the first protector 61a.

Figures 9A and 9B shows an assembly 5 in accordance with embodiments; Figure 9B is a zoomed-in version of Figure 9A and also illustrates shrouds 16, not shown in Figure 9A for the sake of clarity only.

The assembly 5 comprises a plurality of first members in the form of adapters 11, and a second member in the form of a plate lip 12a. The plate lip 12a is coupled or couplable with digging implements 1, which in some embodiments are also comprised in the assembly 5.

Each adapter 11 comprises a cavity for receiving a sensor, a channel so that one or more electric wires of the assembly passes from a respective cavity to the second member, i.e. the plate lip 12a, where the one or more wires are attached to (e.g. with adhesive) and go to the side so that one or more electric wires are provided on the digging implements 1, on a side 2 thereof, so that connection can be made beyond the digging implements 1, for instance on a stick, a boom, a cabin, etc.

As explained above, the assembly 5 also comprises wear caps 13 that preferably cover the cavities on the adapters 11.

The assembly 5 also comprises one or more protectors 60d that are attached to the external surface of the plate lip 12a. The wiring or at least a portion thereof goes through the cavity formed by the protectors 60d and the external surface of the plate lip 12a. The position of the wiring is such that it is spaced apart from the edge of the plate lip 12a that contacts the digging implements 1, thus in those cases in which the plate lip 12a is welded to the digging implements 1 rather than attached by way of mechanical devices, the wiring is at a distance from the welding, thereby avoiding getting damaged. Likewise, with said position of the wiring the electric wires extend linearly on the plate lip 12a, thereby reducing the length of wires necessary for wiring the assembly 5,

At one or both sides of the plate lip 12a, the electrical wiring goes from the plate lip 12a or the edge-most adapters 11 to the digging implements 1. A protector 60e, which may or may not be comprised by the assembly 5, is preferably arranged on the digging implements 1 adjacent to the internal side 2 thereof. The wiring and the protector 60e preferably extend through the entire internal side 2 of the digging implements 1; at that location, the wiring preferably reaches an external side of the digging implements 1 by means of a through hole formed for receiving the wiring.

From the external side, the electrical wiring may connect with a wires connection panel arranged on a surface of the digging implements proximate or adjacent to a location where the digging implements are coupled with the stick of the machine. One or more other electric wires then extend from the wires connection panel to the stick. Alternatively, instead of connecting with the wires connection panel on the digging implements, the electrical wiring may further extend to the stick or connect with additional electric wiring or a wires connection panel on the stick of the earth moving machine.

**The** electrical wiring that extends from the external side of the digging implements to the stick is preferably within a flexible protective tube or a flexible cable harness.

From the stick, the electrical wiring preferably goes alongside other wiring of the machine, such as wiring for lighting of the machine, and/or wiring for the hydraulics of the machine.

It will be noted that the wiring may include a single electric wire or a plurality of electric wires.

As shown in Figure 9B, shrouds 16 of the plate lip 12a can be arranged on top of the protector 60d so as to add a further level of protection to the electrical wiring. To that end, the shrouds 16 might have to be manufactured such that a shape thereof is adapted to the presence of the protector 60d and, thus, to the shape of the protector 60d. When no protectors are arranged, the shrouds 16 are either dimensioned to let the electrical wiring to go underneath the shrouds 16 or have a slot formed thereon to make a passageway for the electrical wiring.

Although not illustrated, in some of these embodiments and in some other embodiments, each shroud 16 also includes a cavity for receiving a sensor, preferably on an underside thereof (i.e. the surface contacting the plate lip 12a), a channel for electric wiring, and a sensor. For instance, the shrouds 16 may have a cavity similar to that of the adapter 11c of Figure 3 on the underside of the shroud 16, which may even be filled or partially filled with material by way of a potting process.

Figure 10 shows a graph with a force measured by a sensor of an assembly in accordance with embodiments.

The graph shows a force measured by a single sensor in a cavity in a wear element when the digging implements start to hit and scratch 100 the soil, hit, scratch and load 101 the soil, transport 102 the soil, and unload 103 the soil.

From these operations, the one that needs to be monitored more reliably and with more data is the hit and scratch 100 and 101 operations because those have the maximum influence on the health condition of the digging implements and wear elements thereof, and also alters how much material will be loaded.

During the hit and scratch 100 and 101, the sensor is substantially buried in the soil, yet the data it generates must be provided to the operator of the machine or to a control center, in this way the ongoing ground engagement can be adjusted and/or stopped based on the status of both the soil and the digging implements, otherwise the wear elements may break, or the trajectory or angle of attack of the digging implements be suboptimal. The presence of the sensor within the soil reduces the effectivity of wireless communications; it is noted that usually digging implements incorporate multiple sensors with high sampling frequencies, hence wireless communications shall cope with all these demands. By contrast, assemblies as presently disclosed are capable of transmitting the data even when the sensors are within the soil.

The measurements of the sensors and the transmission of the same, especially during the hit and scratch 100 and 101 operations, is important for knowing the force that the wear elements are subjected to and with what angles, detecting the different events during the operation of the earth moving machine (e.g. working time, digging time, filled digging implements time, etc.), and both determining and classifying the movements and the terrain. All of these may also be digitally processed by one or more computing devices or control units of the earth moving machine to automatically adjust the operation thereof, i.e. autonomous operation, or to automatically assist the operator of the machine in managing the machine, in which case the computing device(s) or control unit(s) modify the force applied, the trajectory and/or the angle of attack of the digging implements.

Figure 11 diagrammatically shows ground engaging and material scooping with digging implements 1 of an earth moving machine (not illustrated).

The machine moves the bucket 110, by means of the boom and stick thereof, according to a trajectory 75 intended to engage ground 90 with wear elements like teeth 10 so as to scoop ground material, thereby having loaded material 91 in the digging implements 1. During the engaging and scooping, corresponding to hit and scratch 100 and load 101 operations in the graph of Figure 10, the implements 1 are rotated according to a rotating motion 76 that changes an angle of attack of the digging implements 1 and, thus, the teeth 10.

While the ground 90 is being engaged and scooped, part of the wear elements and, normally, also part of the digging implements 1 are inserted in the ground 90; positions 80 are indicated for the sake of clarity only. The sensors and corresponding electronic devices become inserted in the ground 90 together with the wear elements and the digging implements 1. And so, when the electronics include RFID tags or antennas for wireless communication of data, the insertion in the ground 90 increases the losses that the wireless communications must overcome to arrive at a receiving device with sufficient power, and the losses are greater the more inserted the RFID tags or antennas are.

With wired communications extending from the sensor itself according to the present disclosure, the data can be transmitted at high data rates, with low latency and reliably, thereby making possible to have the data generated available at e.g. a cabin of the machine or a control center while the machine engages material such as ground.

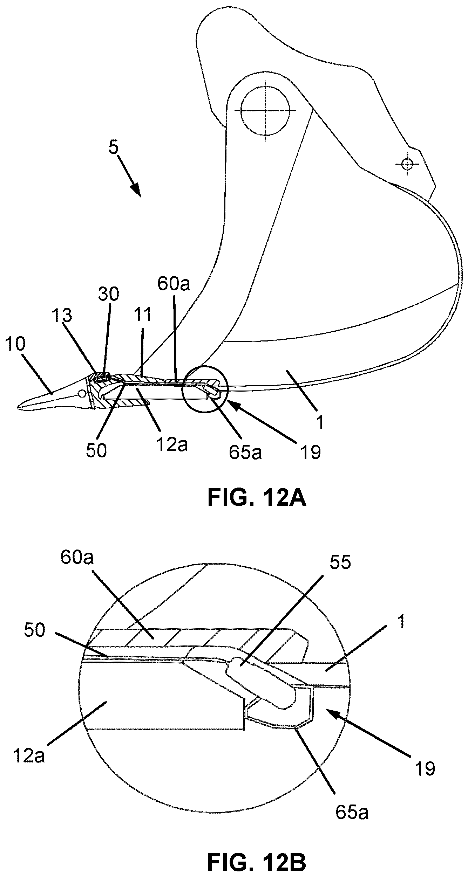

Figures 12A-12E show different views of an assembly 5, and digging implements 1, in accordance with embodiments.

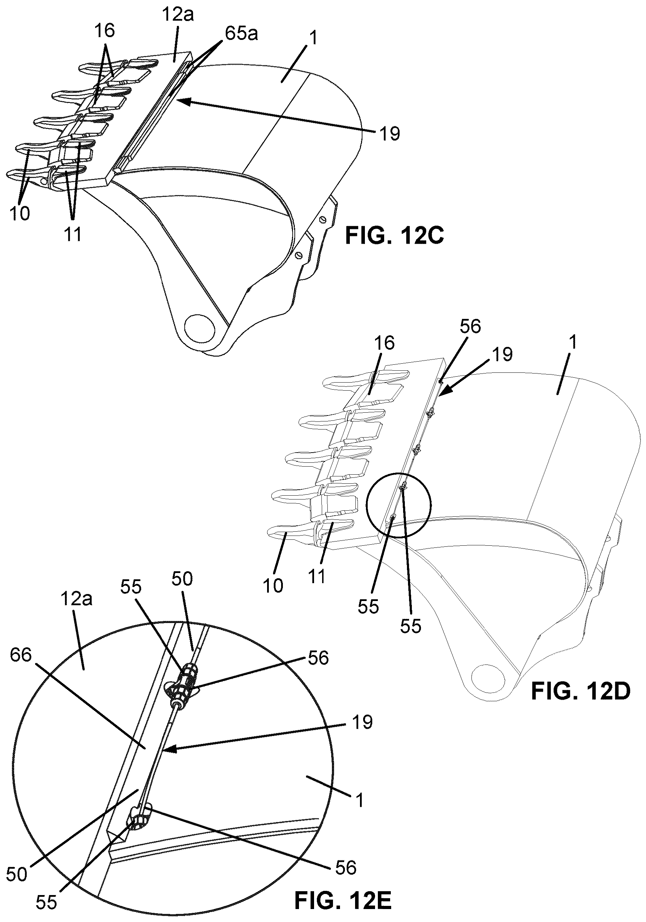

The digging implements 1 and the assembly 5 at least comprise a first member in the form of an adapter 11, and a second member in the form of a plate lip 12a; the plate lip 12a is coupled with the digging implements 1 preferably at least by welding joints 66 (one welding joint 66 is illustrated in Figure 12E). In this case, there is a plurality of first members. The digging implements 1 may be a third member of the assembly 5 in some embodiments.

Each adapter 11 comprises a cavity 30 for receiving one or more sensors. Each adapter 11 also has a channel formed between an inner surface of the adapter 11 and an outer surface of the plate lip 12a. Preferably, the channel is on the upper surface of the plate lip 12a. One or more electric wires extend from the sensor or sensors in the adapter 11 to an opening formed on the (top) surface of the plate lip 12a, or formed on the (top) surface of the digging implements 1, or formed on both the surface of the plate lip 12a and the surface of the digging implements 1. The opening communicates with coupling region 19 where the plate lip 12a couples with the digging implements 1. The one or more electric wires go through said opening as well until they reach the coupling region 19.

The coupling region 19 is at a rear end of the plate lip 12a and at a front end of the digging implements 1, and is on the lower surface of the digging implements 1, i.e. on the surface closer to the ground during normal operation of the digging implements 1. The coupling region 19 forms an L-shape when inspected from the side owing to the way the two components are coupled together and the greater thickness that the plate lip 12a or the blade features. It is, thus, in the cavity formed by said L-shape where the wiring and the protector are both arranged.

Wear caps 13 and/or the adapters 11 themselves protect the one or more electric wires 50 in their path from the sensor to the opening until they reach the coupling region 19, notwithstanding a protector 60a may be arranged e.g. on the (top) surface of the plate lip 12a through which the one or more electric wires extend to reduce the damage they may suffer.

A protector 65a is preferably arranged on the coupling region 19. The protector 65a is coupled to both the plate lip 12a and the digging implements 1, and it provides a cavity for the electric wires to go through. The protector 65a further protects tee connectors 55 (as shown in Figures 12A, 12B and 12D) that may be arranged on the coupling region 19 for connecting the one or more electric wires of each adapter 11 with the one or more electric wires of the remaining adapters 11. The protector 65a likewise covers the openings 56 on the plate lip 12a from the side of the coupling region 19.

A zoomed-in side view of the protector 65a is shown in Figure 12B, which shows a close-up of the circular portion illustrated in Figure 12A.

Figure 12C shows the assembly 5 and the digging implements 1 from the underside of the latter to better illustrate the coupling region 19 and the protector 65a, whereas Figure 12D shows the assembly 5 and the digging implements 1 from the same view but without illustrating the protector 65a shown. As it can be appreciated in Figure 12D, the tee connectors 55 are provided on the coupling region 19 such that the electric wires can extend transverse to the digging implements 1 so that the electric wires can reach one of the lateral sides of the digging implements 1. As the protector 65a extends in the transverse direction of the digging implements 1 (the transverse direction being the direction going into the sheet or coming out from the sheet in the view of Figure 12A), the electric wiring and the tee connectors 55 in the coupling region 19 are both protected, especially from hits and erosion as the digging implements contact the engaged material during operation thereof.

Figure 12E shows a close-up of the circular portion of Figure 12D that illustrates two tee connectors 55, and the openings 56 through which respective electric wire(s) 50 may reach the tee connectors 55 and/or where the tee connectors 55 are introduced.

At one end of the coupling region 19, in this case the end illustrated in Figure 12E, the wiring is made go through the opening 56 to reach the other surface of the plate lip 12a, in this case the top surface, so that it may be routed towards the digging implements and up to another part of the earth moving machine. Further, in one end of the coupling region 19, in this case the end not illustrated in Figure 12E, no tee connector 55 is usually provided since there is no junction of at least three electric wires unless wiring of sensors of at least two adapters is to be routed towards the digging implements and up to another part of the earth moving machine through that end as well, namely, electric wiring is present on both sides of the digging implements and routed towards the machine on both sides.

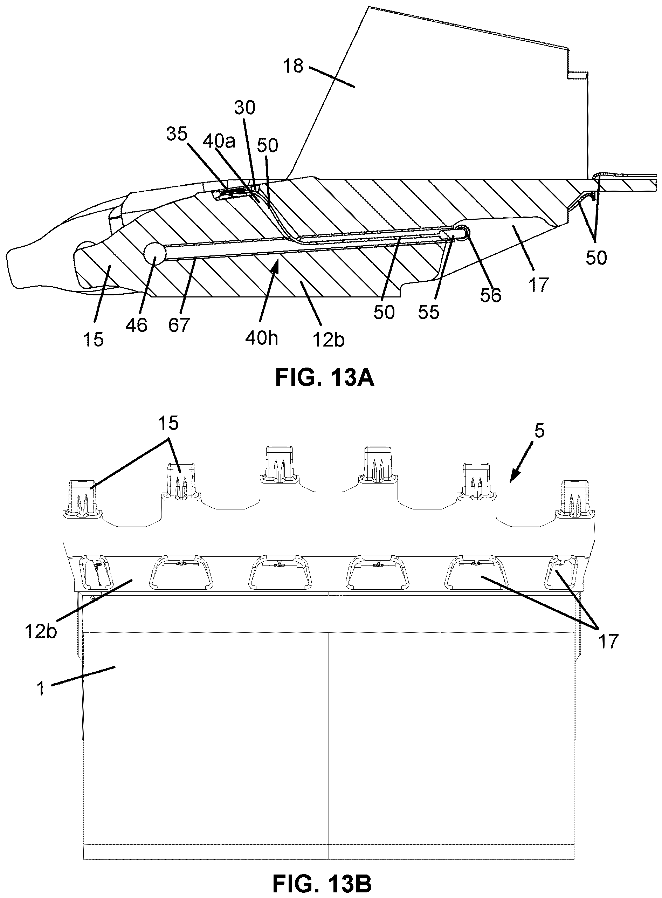

Figures 13A-13F show different views of an assembly 5, and digging implements 1, in accordance with embodiments.

The digging implements 1 and the assembly 5 at least comprise a first member in the form of a nose 15, and a second member in the form of a cast lip 12b coupled with the digging implements 1, e.g. welded thereto. In this case, there is a plurality of first members. The digging implements 1 may be a third member of the assembly 5 in some embodiments.

Each nose 15 at least has a cavity 30 for receiving one or more sensors 35, and a first channel 40a formed therein that communicates with a second channel 40h as illustrated in the cross-section view of Figure 13A. The second channel 40h extends from the first channel 40a to a recess or groove 17 at the rear end of the lip 12b. In some embodiments, the second channel 40h may extend from a hole 46 of the nose 15 for receiving the pin to the recess or groove 17.

To this end, aligned with each nose 15 there is a recess 17 formed at the rear end of the lip 12b as best seen in Figure 13B. Preferably, the second channel 40h is as high as possible within the lip 12b to have more material between the floor and the second channel 40h; the second channel 40h may be at a height such that its opening at the recess 17 is flush with the top surface of the recess 17 or there is a gap with the top surface that is as short as possible.

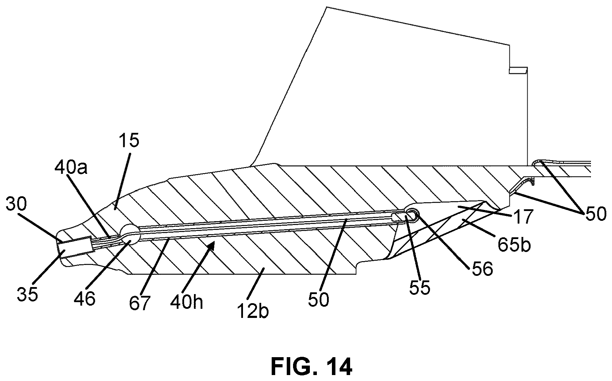

The recess 17 provides protection to what is hosted in there and, like in the embodiments of Figure 14, a protector 65b could be arranged to enclose the hosted components.

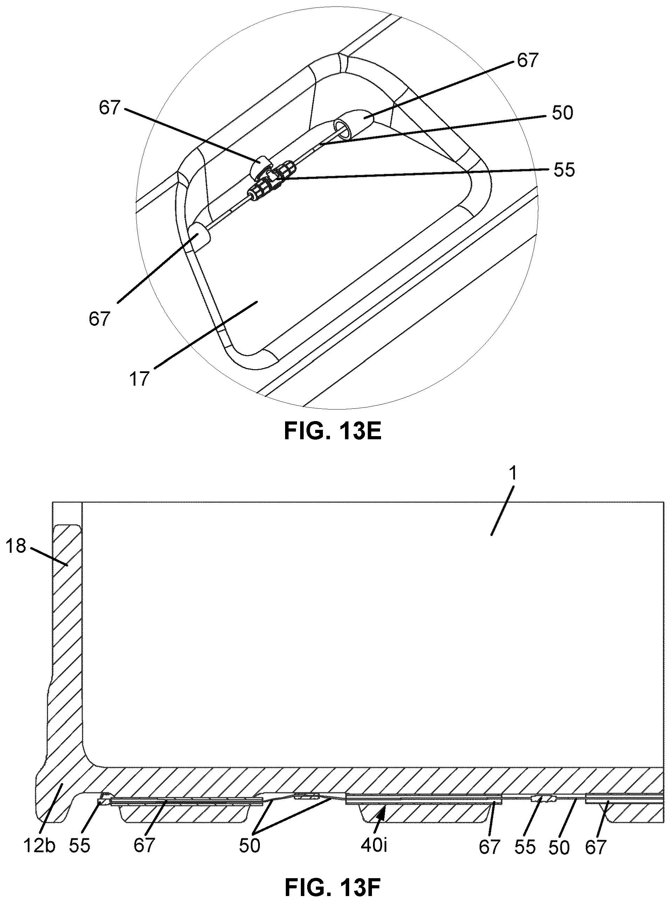

One or more electric wires 50 go from the sensor(s) 35 to the recess 17 going through the first channel 40a and the second channel 40h. Tee connectors 55 can be arranged within the recess 17 to connect electric wires 50 coming from the sensors 35 of different first members. Further, the electric wires 50 of the different first members can be connected by way of third channels 40i formed between each pair of neighboring recesses 17 as shown in Figure 13F.

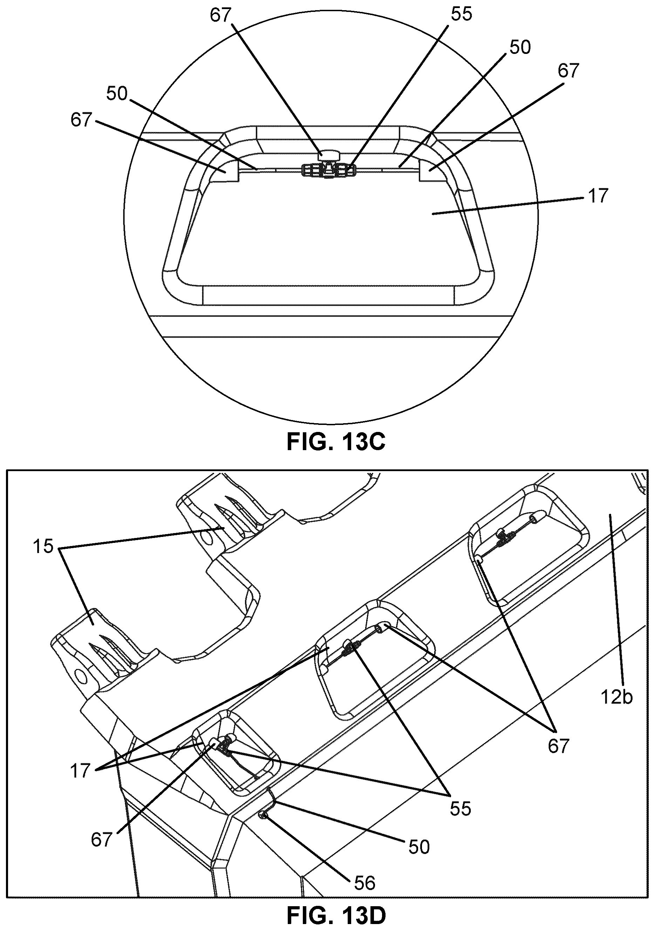

The close-ups of Figures 13C and 13E respectively illustrate the circular portions of Figures 13B and 13D, and show the arrangement of tee connectors 55 within the recess 17, together with the electric wires 50 connecting with both the sensor of the corresponding nose, and the electric wires 50 of the neighboring recesses 17 in a transverse direction of the digging implements 1.

At least in the recess 17 corresponding to one of the corner noses 15 of the lip 12b, electric wiring 50 can be extracted towards the digging implements 1 and other parts of the earth moving machine by routing the electric wire(s) 50 from the recess 17 to a rear part. An opening 56 may be formed in the lip 12b or the digging implements 1 to let the electric wire(s) go from the bottom surface to the top surface. As explained with reference to Figures 12A-12E, the electric wiring can be extracted at just one end of the assembly 5 or digging implements 1, but in some embodiments the electric wiring is extracted at both ends of the assembly 5 or digging implements 1 in the fashion just explained.

Additionally, in some embodiments, protective tubes 67 are arranged within the second channels 40h and/or the third channels 40i through which the electric wires 50 pass.

Figure 13F shows a cut view of the lip 12b, particularly half portion thereof. The cut view allows to see the routing of the electric wires 50 between neighboring recesses 17. In each recess 17, preferably a tee connector 55 is provided for connecting the different electric wires 50. Likewise, protective tubes 67 may be placed inside the channels 40i for protecting the electric wires 50 therewithin.

One, some or each of the first, second and third channels 40a, 40h, 40i are preferably formed during steel casting process of the lip 12b. For instance, tubes capable of withstanding temperatures typical in a casting process are put within the molds of the lip 12b; by way of example, ceramic tubes tend to withstand casting temperatures. The tubes may, in some embodiments, be left within the manufactured lip 12b for wire routing and protection.

With the formation of the channels during the casting process, the resulting lip 12b is more cost-effectively manufactured as less or no machining at all is necessary for the formation of channels.

Figure 14 shows an assembly (and digging implements) in accordance with embodiments.

The assembly has a cavity 30 for a sensor 35 at a front-most edge of a nose 15 that engages a cavity of a tooth. The cavity 30, which is even more at the front than a hole 46 for receiving a pin, is connected with a recess or groove 17 by way of a first channel 40a extending between the cavity 30 and the hole 46, and a second channel 40h extending between the hole 46 and the recess or groove 17.

The first and second channels 40a, 40h are preferably formed during the casting process as explained above.

At least one electric wire 50 goes from the cavity 30 of the sensor 35 to the recess or groove 17 through the nose 15, the hole 46, and the lip 12b via the first and second channels 40a, 40h.

Preferably, wiring 50 coming from sensors 35 of different noses 15 gets interconnected with one or more tee connectors 55 arranged in the recess or groove 17, and with the wiring going through openings 56 and third channels as explained with reference to the embodiments of Figures 13A-13F.

The wiring 50 may be extracted from behind of the lip 12b to connect it with other parts of the machine (as illustrated in the right-most part of Figure 14) through one or more openings and/or channels, like for instance as explained with reference to the embodiments of Figures 13-13F.

The components arranged inside the recess or groove 17 may be additionally protected with a protector 65b, which may be a plate made of steel or another alloy that is attached to edges of the recess or groove 17 preferably with weld joints. Other type of protectors 65b are possible as well.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An assembly (5) for an earth moving machine, comprising:
a first member (11a-11c,15,16) and a second member (1,12a,12b) coupled with the first member, the first member (11a-11c,15,16) being a wear element for digging implements (1), and the second member (1,12a,12b) being digging implements (1) or a lip (12a,12b) for digging implements (1);
at least one sensor (35) configured to sense one or more of: strain, wear, pressure, force, temperature, acceleration, position, terrain, and falling off of a wear element; and
at least one electric wire (50,51a-51c);
wherein the first member (11a-11c,15,16) has the at least one sensor (35) arranged therein; and
wherein the at least one electric wire (50,51a-51c) is attached to the first member (11a-11c,15,16) and the second member (1,12a,12b).

2. The assembly (5) of claim 1, wherein the second member (1,12a,12b) is the lip (12a,12b); wherein the assembly (5) further comprises a third member (1), the third member being the digging implements (1); and wherein the at least one electric wire (50,51a-51c) is further attached to at least one surface of the third member (1).

3. The assembly (5) of any one of the preceding claims, further comprising one or more computing devices or control units; wherein the at least one sensor (35) is at least configured to sense one or more of: strain, pressure and force; wherein the one or more computing devices or control units are configured to: determine force that the first member (11a-11c,15,16) is subjected to based on measurements of the at least one sensor (35).

4. The assembly (5) of claim 3, wherein the one or more computing devices or control units are further configured to: determine an angle of the force based on the measurements of the at least one sensor (35).

5. The assembly (5) of any one of claims 3-4, wherein the one or more computing devices or control units are further configured, based on the measurements of the at least one sensor, to one or more of: detect events during operation of the earth moving machine, determine and classify movements of the earth moving machine, and determine and classify movements of a soil.

6. The assembly (5) of claim 5, wherein the one or more computing devices or control units are further configured to at least detect the events during the operation of the earth moving machine, the events comprising one or more of: start to hit and scratch the soil, hitting the soil, scratching the soil, loading the soil, transporting the soil, and unloading the soil.

7. The assembly (5) of any one of claims 3-6, wherein the one or more computing devices or control units are configured to automatically modify, based on measurements of the at least one sensor (35): force applied by the digging implements (1), and/or a trajectory of the digging implements (1), and/or an angle of attack of the digging implements (1).

8. The assembly (5) of any one of the preceding claims, wherein the assembly is configured to transmit data comprising measurements of the at least one sensor (35) when the at least one sensor (35) is within a soil.

9. The assembly (5) of any one of the preceding claims, wherein the first member (11a-11c,15,16) comprises a first cavity (30) having the at least one sensor (35) arranged therein.

10. The assembly (5) of any one of the preceding claims, wherein the first member (11a-11c,15,16) further comprises a channel (40a-40f) adapted to receive the at least one electric wire (50,51a-51c).

11. The assembly (5) of any one of the preceding claims, further comprising a plurality of the first members (11a-11c,15,16), the second member (1,12a,12b) being coupled with the plurality of first members; wherein the assembly further comprises N tee connectors (55), with N being equal to or greater than a number of first members in the plurality of the first members (11a-11c,15,16) minus one; wherein the N tee connectors (55) are electrically connected between them in a cascaded manner; wherein the at least one electric wire (50,51a-51c) at least comprises as many electric wires as first members (11a-11c,15,16) are in the plurality, and each electric wire (50,51a-51c) is electrically connected with one of the N tee connectors (55).

12. The assembly (5) of any one of the preceding claims, wherein the first member (11a-11c,15,16) is an adapter (11a-11c), a cast nose (15), a weld-on nose or a shroud (16).

13. An earth moving machine comprising: one or more assemblies (5) according to any one of the preceding claims; and/or digging implements comprising one or more assemblies (5) according to any one of the preceding claims.

14. A wear element for digging implements for an earth moving machine, comprising:
at least one sensor (35) configured to sense one or more of: strain, wear, pressure, temperature, acceleration, position, terrain, and falling off of a wear element; and
at least one electric wire (50,51a-51c);
wherein one or more electric wires of the at least one electric wire (50,51a-51c) are connected to the at least one sensor (35); and
wherein the wear element is one of: an adapter (11a-11c), a cast nose (15), a weld-on nose or a shroud (16).

15. A method comprising:
arranging at least one sensor (35) in a first member (11a-11c,15,16), the first member being a wear element for digging implements (1) of an earth moving machine, and the at least one sensor (35) being configured to sense one or more of: strain, wear, pressure, force, temperature, acceleration, position, terrain, and falling off of a wear element;
coupling the first member (11a-11c,15,16) with a second member (1,12a,12b), the second member being digging implements (1) or a lip (12a,12b) for digging implements of an earth moving machine;
attaching at least one portion of at least one electric wire (50,51a-51c) to the first member (11a-11c,15,16); and
attaching at least one other portion of the at least one electric wire (50,51a-51c) to the second member (1,12a,12b).
